# DEMANDE DE BREVET EUROPEEN

(11) **EP 2 471 685 A1**
(43) Date de publication de la demande: **04.07.2012**
(21) Numéro de dépôt: 11195964.9
(22) Date de dépôt: 28.12.2011
(51) Int. Cl.: B60N 3/04

(54) **Sur-tapis de protection d'un tapis de sol de véhicule automobile**

(30) Priorité: 29.12.2010 FR 1005174
(71) Demandeur: Centre d'Etude et de Recherche pour l'Automobile (CERA), 51100 Reims (FR)
(72) Inventeur: Meriaux, Loïc, 51480 Cumières (FR); Roulot, Didier, 51190 Le Mesnil sur Oger (FR)
(74) Mandataire: Sayettat, Julien Christian

(57) **Abrégé**

L'invention concerne un sur-tapis (1) de protection d'un tapis de sol de véhicule automobile, ledit sur-tapis présentant la structure d'un complexe comprenant une couche d'endroit (2) à base de matériau de revêtement solidaire d'une couche d'envers (3) de renfort, ledit sur-tapis étant caractérisé en ce que la périphérie de ladite couche d'endroit est repliée vers le bas de manière à former un rebord (4) masquant la tranche de ladite couche d'envers. L'invention concerne également un procédé de réalisation d'un sur-tapis (1).

## Description

L'invention concerne un sur-tapis de protection d'un tapis de sol de véhicule automobile et un procédé de réalisation d'un tel sur-tapis.

Il est connu de réaliser un sur-tapis de protection d'un tapis de sol de véhicule automobile, ledit sur-tapis présentant la structure d'un complexe comprenant une couche d'endroit à base de matériau de revêtement solidaire d'une couche d'envers de renfort, destinée notamment à lui donner de la tenue.

Dans un tel sur-tapis, il est généralement nécessaire, pour des raisons esthétiques, de masquer la tranche de la couche d'envers.

Un tel masquage est usuellement réalisé par ajout d'une ganse périphérique - en variante, la ganse peut être remplacée par un surjet - associée notamment par couture, ce qui entraîne un surcoût important de réalisation.

En outre, un tel agencement crée une rupture visuelle entre le tapis et le sur-tapis, du fait de la présence de la ganse.

Par ailleurs, il s'avère très difficile de réaliser des angles droits, ce qui est limitant en matière de design.

L'invention a pour but de pallier ces inconvénients.

A cet effet, et selon un premier aspect, l'invention propose un sur-tapis de protection d'un tapis de sol de véhicule automobile, ledit sur-tapis présentant la structure d'un complexe comprenant une couche d'endroit à base de matériau de revêtement solidaire d'une couche d'envers de renfort, la périphérie de ladite couche d'endroit étant repliée vers le bas de manière à former un rebord masquant la tranche de ladite couche d'envers.

Dans cette description, les termes de positionnement dans l'espace (bas, endroit, envers,...) sont pris en référence au sur-tapis disposé dans le véhicule. Avec l'agencement proposé, on s'affranchit de la nécessité d'une ganse - ou autre finition périphérique - coûteuse, l'esthétique de la périphérie du sur-tapis étant traitée par une simple conformation géométrique.

Selon un deuxième aspect, l'invention propose un procédé de réalisation d'un tel sur-tapis.

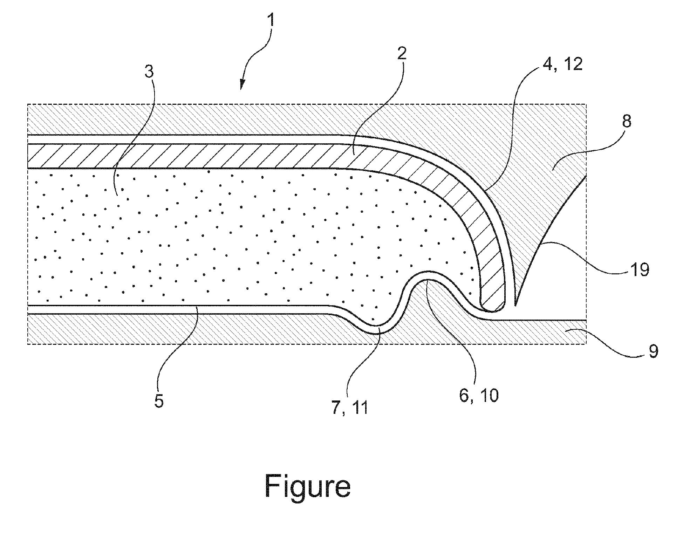

D'autres particularités et avantages de l'invention apparaîtront dans la description qui suit, faite en référence à la figure jointe qui est une vue schématique partielle en coupe d'un sur-tapis en cours de réalisation selon un procédé particulier.

En référence à la figure, on décrit un sur-tapis 1 de protection d'un tapis de sol de véhicule automobile, ledit sur-tapis présentant la structure d'un complexe comprenant une couche d'endroit 2 à base de matériau de revêtement - notamment à base de textile tel qu'une moquette - solidaire d'une couche d'envers 3 de renfort, destinée notamment à lui conférer de la tenue, la périphérie de ladite couche d'endroit étant repliée vers le bas de manière à former un rebord 4 masquant la tranche de ladite couche d'envers.

Selon la réalisation représentée le rebord 4 s'étend vers le bas sensiblement jusqu'au niveau de la face d'envers 5 de la couche d'envers 3.

Selon une réalisation, la couche d'envers 3 est à base de matériau thermoplastique.

Selon la réalisation représentée, la couche d'envers 3 présente une gorge 6 périphérique courant le long du rebord 4.

Selon la réalisation représentée, la couche d'envers 3 présente en outre un bourrelet 7 courant le long du bord interne - c'est à dire celui qui est le plus éloigné de rebord 4 - de la gorge 6 périphérique.

La raison d'être des gorge 6 et bourrelet 7 est explicitée plus loin.

On décrit à présent un procédé de réalisation d'un sur-tapis 1 selon une réalisation, ledit procédé comprenant les étapes de :
- prévoir un flan de complexe comprenant une couche d'endroit 2 à base de matériau de revêtement solidaire d'une couche d'envers 3 de renfort à base de matériau thermoplastique,
- prévoir un moule comprenant une matrice 8 et un poinçon 9, ledit poinçon comprenant successivement, depuis sa périphérie, un bourrelet de moule 10 et une gorge de moule 11, destinés à mouler respectivement la gorge 6 et le bourrelet 7 de ladite couche d'envers, ladite matrice comprenant une paroi latérale 12 périphérique destinée à mouler le rebord 4 dudit sur-tapis, l'extrémité libre de ladite paroi formant lame 13 de découpe dudit flan,
- disposer ledit flan entre ladite matrice et ledit poinçon, couche d'endroit 2 contre ladite matrice, ledit flan saillant de ladite lame vers l'extérieur,
- fermer ledit moule en écrasant à chaud - notamment par chauffage d'une bande périphérique du poinçon 9 - une bande périphérique de ladite couche d'envers, de manière à découper ledit flan et à mouler lesdits rebord, gorge et bourrelet,
- ouvrir le moule et démouler le sur-tapis 1 obtenu.

Dans un tel procédé, la présence du bourrelet de moule 10 permet de faciliter la mise en forme du rebord 4, ceci du fait du retrait de matériau constitutif de la couche d'envers 3 en regard dudit rebord, ledit retrait étant matérialisé par la gorge 6 de ladite couche d'envers.

En outre, la gorge de moule 11 permet de recueillir le matériau de la couche d'envers 3 évacué par le bourrelet de moule 10, ledit matériau formant en définitive le bourrelet 7 de ladite couche d'envers.

## Revendications

1. Sur-tapis (1) de protection d'un tapis de sol de véhicule automobile, ledit sur-tapis présentant la structure d'un complexe comprenant une couche d'endroit (2) à base de matériau de revêtement solidaire d'une couche d'envers (3) de renfort, ledit sur-tapis étant **caractérisé en ce que** la périphérie de ladite couche d'endroit est repliée vers le bas de manière à former un rebord (4) masquant la tranche de ladite couche d'envers.

2. Sur-tapis selon la revendication 1, **caractérisé en ce que** le rebord (4) s'étend vers le bas sensiblement jusqu'au niveau de la face d'envers (5) de la couche d'envers (3).

3. Sur-tapis selon la revendication 1 ou 2, **caractérisé en ce que** la couche d'envers (3) est à base de matériau thermoplastique.

4. Sur-tapis selon l'une quelconque des revendications 1 à 3, **caractérisé en ce que** la couche d'envers (3) présente une gorge (6) périphérique courant le long du rebord (4).

5. Sur-tapis selon la revendication 4, **caractérisé en ce que** la couche d'envers (3) présente en outre un bourrelet (7) courant le long du bord interne de la gorge (6) périphérique.

6. Procédé de réalisation d'un sur-tapis (1) selon les revendications 3 à 5, **caractérisé en ce qu'**il comprend les étapes de :
• prévoir un flan de complexe comprenant une couche d'endroit (2) à base de matériau de revêtement solidaire d'une couche d'envers (3) de renfort à base de matériau thermoplastique,
• prévoir un moule comprenant une matrice (8) et un poinçon (9), ledit poinçon comprenant successivement, depuis sa périphérie, un bourrelet de moule (10) et une gorge de moule (11), destinés à mouler respectivement la gorge (6) et le bourrelet (7) de ladite couche d'envers, ladite matrice comprenant une paroi latérale (12) périphérique destinée à mouler le rebord (4) dudit sur-tapis, l'extrémité libre de ladite paroi formant lame (13) de découpe dudit flan,
• disposer ledit flan entre ladite matrice et ledit poinçon, couche d'endroit (2) contre ladite matrice, ledit flan saillant de ladite lame vers l'extérieur,
• fermer ledit moule en écrasant à chaud une bande périphérique de ladite couche d'envers, de manière à découper ledit flan et à mouler lesdits rebord, gorge et bourrelet,
• ouvrir le moule et démouler le sur-tapis (1) obtenu.
